# EUROPÄISCHE PATENTANMELDUNG

(11) **EP 0 534 353 A1**
(43) Veröffentlichungstag der Anmeldung: **31.03.1993**
(21) Anmeldenummer: 92116143.6
(22) Anmeldetag: 21.09.1992
(51) Int. Cl.: B23H 7/02

(54) **Verfahren zur funkenerosiven Bearbeitung von Werkstücken mittels eines Drahtes**

(30) Priorität: 23.09.1991 DE 4131650
(71) Anmelder: AG für industrielle Elektronik AGIE Losone bei Locarno, CH-6616 Losone/Locarno (CH)
(72) Erfinder: Sciaroni, Boris, CH-6604 Locarno (CH)
(74) Vertreter: Turi, Michael, Dipl.-Phys.

(57) **Zusammenfassung**

Bei einem Verfahren zur funkenenerosiven Bearbeitung von Werkstüken (1) mittels eines Drahtes (6), bei dem ein Bearbeitungsspalt (3) gebildet und ein Formstück (2) aus dem Werkstück (1) geschnitten wird, wird durch gezieltes Einstellen einzelner Erosionsparameter wenigstens eine Ablagerung (4) im Bearbeitungsspalt (3) gebildet, um das Formstück (2) im Werkstück (1) zu sichern.

## Beschreibung

Die Erfindung bezieht sich auf ein Verfahren zur funkenenerosiven Bearbeitung von Werkstüken mittels eines Drahtes, bei dem ein Bearbeitungsspalt gebildet und ein Formstück aus dem Werkstück geschnitten wird.

Ein wichtiges Problem der Drahterosion ist die Sicherung der Formstücke im bzw. am Werkstück. Zur Formstücksicherung zählen die Ausfall- und/oder die Zentrier- und/oder die Leitfähigkeitssicherung von Ausfallstücken bei der Herstellung von Matrizen und/oder Stempeln. Weiterhin umfaßt die Formstücksicherung - bei der sogenannten Durchdringungstechnik - auch das Sichern einzelner abzutrennender Formteile an einem Restwerkstück.

Bei der Formstücksicherung muß:
a) zwischen Werkstück und Formstück eine elektrische Leitung bestehen, damit das innere Formstück fertig bearbeitet werden kann (Leitfähigkeitssicherung);
b) eine starre Positionierung des Formstückes gewährleistet sein (Zentriersicherung);
c) das Formstück einfach herausnehmbar sein, damit eine erodierte Matrize oder Patrize nicht beschädigt wird.

Aus dem Stand der Technik sind verschiedenste Sicherungsverfahren bekannt, die jedoch i.A. relativ zeitaufwendig sind. So muß das Bedienpersonal eingreifen, falls von außen Klammern oder Kleber zur Sicherung angebracht werden müßen, oder es müßen spezielle Schnittbewegungen durchgeführt werden, um geeignete Sicherungsmittel - wie z.B. einen verbindenden Steg - zwischen Werkstück und Steg stehenzulassen.

Das Ziel der vorliegenden Erfindung besteht darin, die Bearbeitungszeit bei der Drahterosion zu verkürzen und Totzeiten zu minimieren.

Dieses Ziel der Erfindung wird erreicht, indem wenigstens eine Ablagerung im Bearbeitungsspalt gebildet wird, um das Formstück im Werkstück zu sichern (Anspruch 1).

Damit wird es möglich, Formstücke im Werkstück auf einfache Weise schnell zu sichern, ohne daß extern durch Bedienpersonal in den Erosionsvorgang eingegriffen werden muß. Die schnelle Formstücksicherung verringert oder eliminiert sogar die Totzeiten der Maschine (durch eine hohe Automatisierung) und verkürzt damit die gesamte Bearbeitungszeit. Es sind weder zusätzliche Sicherungsmittel wie Klammern oder Kleber erforderlich, noch ist es notwendig, die Erosionsrichtungen zum Durchführen der Sicherung zu ändern oder gar zusätzliche Schnitte anzubringen. Das erfindungsgemäße Erosionsverfahren bietet sich als besonders schnelle Möglichkeit der Formstücksicherung für alle Erosionsvorgänge an, die eine hohe Bearbeitungsgeschwindigkeit erfordern. Weiterhin wird ein vielseitiges Sicherungsverfahren geschaffen, das unkompliziert automatisierbar ist.

Ein zusätzlicher Vorteil des erfindungsgemäßen Verfahrens besteht in seiner Vielseitigkeit. Es ist problemlos bei verschiedensten Erodiertechniken wie z.B. bei Vollabtragstechniken (Pocketing), Anreihungstechniken, Durchdringungstechniken, Anschnitt- und Ausschnitttechniken sowie Einpaßtechniken anwendbar und kann ohne weiteres mit Sicherungstechniken wie der Partialstegtechnik kombiniert werden. Der Begriff "Formstücksicherung" umfaßt z.B. auch das Befestigen von "Mosaikstücken", die bei Einpaßverfahren von außen in das Werkstück eingesetzt werden.

Die Drahterosion stößt bei dieser Art der erfindungsgemäßen Formstücksicherung in ungewohnter Weise in angrenzende elektrochemische und physikalisch/chemische Verfahrensbereiche wie Schweißen, Löten und im weiteren Sinne bis in Grenzbereiche des Sprengplattierens im Mikrobereich vor.

I.A. entsteht im Bearbeitungsspalt eine Ablagerung, die überwiegend aus Drahtmaterial des Erodierdrahtes besteht. Im Grenzbereich zum Werkstük entsteht eine Legierungszone aus Draht- und Werkstückmaterial. Dabei bilden sich in vorteilhafter Weise elektrische Brücken zwischen dem Formstück und dem Werkstück.

Bevorzugt werden die Ablagerungen gerade so stark erzeugt, daß das Formstück im Werkstück zentriert wird (Anspruch 2). Die Ablagerungen überbrücken dann zwar bereits den Erodierspalt, sind jedoch noch nicht so stark, daß das Werkstück gegen Ausfallen gesichert wird. Die vorteilhafte Wirkung der elektrischen Brücke zwischen Werkstück und Formstück sowie die Zentrierwirkung besteht auch bereits bei weniger starken Ablagerungen. Falls das Formstück nicht gegen Ausfallen gesichert werden muß oder wenn die Ausfallstücksicherung durch ein anderes (bekanntes) Sicherungsverfahren durchgeführt werden soll (z.B. durch einen nichtleitenden Klebstoff), kann eine weniger starke, besonders leicht entfernbare Ablagerung als ergänzende Sicherung verwendet werden.

Auf einfache Weise kann die Stärke der Ablagerungen durch ein mehr oder weniger langes Aufrechterhalten der veränderten Erodierparameter variiert werden. Besonders bevorzugt werden die Ablagerungen so erzeugt, daß das Formstück im Werkstück gegen Ausfallen gesichert wird (Anspruch 3). Zusätzliche Sicherungsmethoden sind dann vollends überflüssig.

Bei einer ganz besonders bevorzugten Ausführung des erfindungsgemäßen Verfahrens wird die Ablagerung durch gezieltes Einstellen einzelner Erosionsparameter gebildet (Anspruch 4). Dabei beruht diese Ausführungsform auf der Erkenntnis, daß ein gezieltes Verändern der Erosionsparameter die Erosionsvorgänge so zu verändern vermag, daß physikalischchemische Vorgänge einsetzen, deren Folge Ablagerungen im Erosionsspalt sind.

Bevorzugt werden beim gezielten Einstellen der Erosionsparameter die Impulsparameter gegenüber ihren normalen Einstellungen verändert (Anspruch 5). Die Impulsparameter besitzen einen großen Einfluß auf das Ablagerungsphänomen. Sie sind besonders schnell vollautomatisch variierbar, so daß die Länge der Ablagerungen - und damit indirekt ihre Stärke - leicht und schnell nach Wunsch geregelt werden kann.

Unter "normalen Einstellungen" sind die jeweils zum Erhalt des "sauberen" Rest-Erodierschnittes gewählten Parametereinstellungen zu verstehen. Normalerweise ist es natürlich nicht wünschenswert, daß im Bearbeitungsspalt irgendwelche Ablagerungen enstehen. Um gezielt Ablagerungen zu bilden, müßen daher "extrem falsche" Parametereinstellungen gewählt werden, die der Erodierfachmann üblicherweise meidet.

Bevorzugt wird beim gezielten Einstellen der Impulsparameter die Impulsdauer gegenüber ihrer normalen Einstellung verlängert und/oder die Impulsamplitude gegenüber ihrer normalen Einstellung verringert (Anspruch 6). Ein Verändern wenigstens eines dieser beiden Parameter kann bereits ausreichen, um Ablagerungseffekte zu erhalten.

Vorteilhaft werden beim gezielten Einstellen der Erosionsparameter die Spülparameter gegenüber ihren normalen Einstellungen verändert (Anspruch 7). Je nach Draht- bzw. Werkstückmaterial und den spezifischen Erodierbedingungen kann der Anwender zum Erhalt unterschiedlicher Ablagerungen die Parameter nach seinen eigenen Wünschen verändern. Vorteilhaft wird beim Verändern der Spülparameter der Leitwert des Dielektrikums gegenüber seiner normalen Einstellung verändert (Anspruch 8), wobei ganz besonders vorteilhaft beim gezielten Einstellen der Erosionsparameter die Drahtvorschubgeschwindigkeit verändert werden kann (Anspruch 9).

Besonders bevorzugt wird ein Erodierdraht verwendet, dessen Material, insbesondere Messing, wenigstens teilweise die Ablagerung bildet (Anspruch 10). Derartige Ablagerungen können später leicht mittels eines Sandstrahlgebläses entfernt werden.

Bei Drahtmaterialien dieser Art entstehen im Erodierspalt Energie- und Wärmebedingungen, die eine Art Lötvorgang, insbesondere einen Hartlötvorgang, begünstigen. Das Verfahren ist daher besonders für Drahtmaterialien geeignet, die schweiß- und/oder lötbar sind. Hierbei sind z.B. Kupfer-Zinklegierungen und diesen bezüglich der physikalischen und/oder chemischen Eigenschaften ähnliche Materialien möglich.

Ein weiterer Parameter, der vorteilhaft verändert werden kann, ist die relative Vorschubgeschwindigkeit zwischen Erodierdraht und Werkstück. Der Fachmann kann natürlich je nach Wunsch weitere Erodierparameter verändern: Die bisher aufgezählten Parameter sind nicht abschließend zu verstehen. Im Prinzip können alle Erodierparameter, die die Verhältnisse im Bearbeitungsspalt beeinflußen, verändert werden (z.B. Erodierdrahtwerkstoff, Zündspannung, Dielektrikum, Spülung usw.). Die Änderungen müssen lediglich die Ablagerung unterstützten, d.h., es ist nicht unbedingt erforderlich, daß sie primär für die Entstehung der Ablagerung verantwortlich sind.

Bei einer weiteren, besonders bevorzugten Ausführungsform des erfindungsgemäßen Verfahrens werden die Erosionsparameter derart gewählt, daß die Ablagerungen hauptsächlich an bzw. auf dem Formstück erzeugt werden (Anspruch 11). Hierdurch kann beim Abtrennen des Formstücks vom Werkstück schon ein großer Teil des später durch Nachschnitte zu beseitigenden Hilfsmaterials vermieden werden. Da beim Nachschnitt weniger Material geschnitten werden muß, kann dieser Prozeß bei gleicher Energie schneller oder bei gleicher Geschwindigkeit mit geringerem Energieaufwand durchgeführt werden.

Besonders bevorzugt werden die Sicherungsvorgänge automatisch durch entsprechend ausgelegte Software gesteuert (Anspruch 12). Damit braucht der Operateur nicht in die Sicherungsvorgänge einzugreifen und die Erosion wird weiter verkürzt und automatisiert. Die Software kann Felder umfaßen, in denen der Maschinenhersteller oder ev. auch der jeweilige Anwender einmal ermittelte optimale Einstelldaten für unterschiedlichste Erodierbedingungen abspeichert. Anhand derartiger "Tabellen" stellt die Software dann jeweils geeignete Bedingungen zum Erhalt der Ablagerungen vollautomatisch nach einem vorgegebenen Algorithmus ein.

Besonders bevorzugt werden Konturstellen, die zum Anbringen der Ablagerungen besonders geeignet sind, automatisch bestimmt. Die Automatisierung des erfindungsgemäßen Verfahrens wird damit optimiert, da der Operateur die geigneten Konturstellen (und z.B. auch die geeigneten Konturlängen) nicht mehr von Hand eingeben muß. Der Anwender muß lediglich eine entsprechende Funktion aktivieren (automatische Ablagerungssicherung "Ja/Nein"), um das Sicherungsverfahren zu starten.

Weitere bevorzugte Merkmale der Erfindung ergeben sich aus der nachfolgenden Beschreibung bevorzugter Ausführungsbeispiele des erfindungsgemäßen Verfahrens. Diese Ausführungsbeispiele sind schematisch in der beigefügten Zeichnung dargestellt. In der Zeichnung zeigen:
- Fig. 1: eine Draufsicht auf ein geschnittenes Formstück, das in einem Werkstück durch das erfindungsgemäße Verfahren gegen Ausfallen gesichert wird;
- Fig. 2: einen Querschnitt senkrecht zum Bearbeitungsspalt durch Erodierdraht und Werkstück während des Durchführens des erfindungsgemäßen Verfahrens;
- Fig. 3: eine Draufsicht auf eine Erosionszone während des Durchführens des erfindungsgemäßen Verfahrens;
- Fig. 4: eine Illustration der Impulsformveränderung bei der Durchführung des erfindungsgemäßen Verfahrens.
- Fig. 5: einen teilweisen Querschnitt senkrecht zum Bearbeitungsspalt durch Erodierdraht und Werkstück bei einer Variante mit unterschiedlich stark verteilten Ablagerungen.

Im folgenden wird eine Terminologie verwendet, die der leichteren Lesbarkeit der Beschreibung dient, jedoch nicht einschränkend zu verstehen ist. Beispielsweise beziehen sich die Ausdrücke oben, unten, größer, kleiner usw. auf Maschinen in üblicher Arbeitsaufstellung und Größe sowie auf in üblicher Weise auf einem Maschinentisch angeordnete Werkstücke und Formstücke. Während bei dem bevorzugten Ausführungsbeispiel der Draht stets von oben nach unten durch das Werkstück läuft, ist das erfindungsgemäße Verfahren natürlich auch bei anderen Drahttransportrichtungen realisierbar.

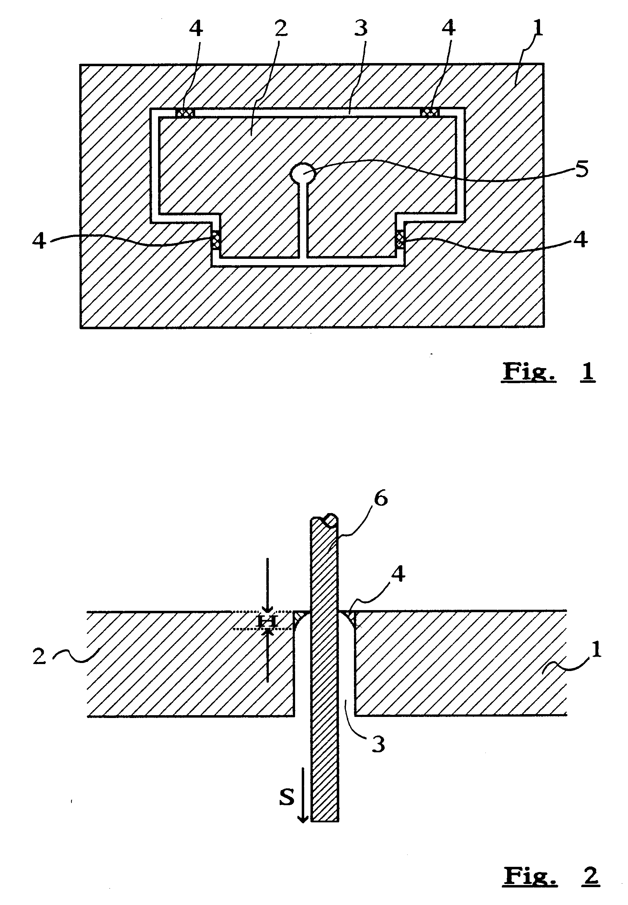

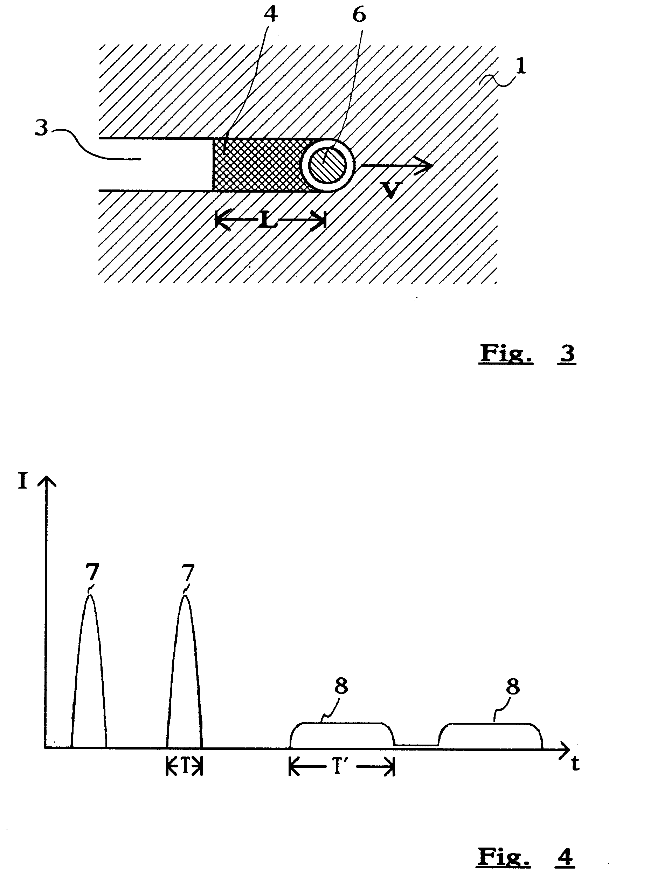

Die Wirkungsweise des erfindungsgemäßen Verfahrens wird in Fig. 1 deutlich. Die Figur zeigt einen Schnitt knapp unterhalb der Oberfläche eines Werkstückes, so daß sich eine Ansicht ergibt, die analog zu einer Draufsicht auf das Werkstück ist (Entsprechendes gilt für Fig. 3).

Fig. 1 zeigt ein Werkstück 1, aus dem ein Formstück 2 unter Bildung eines Bearbeitungsspaltes 3 ausgeschnitten wurde. Das Formstück 2 wird durch mehrere Ablagerungen 4 im Werkstück 1 gesichert. Die Ablagerungen 4 sind so im Werkstück angeordnet, daß das Formstück 2 - z.B. hier ein beim Herstellen einer Matrize ausgeschnittenes Ausfallstück - dreh- und kippsicher im Werkstück 1 zentriert ist.

Das erfindungsgemäße Verfahren läuft bevorzugt in der nachfolgend beschriebenen Weise ab:

Ein Bohrloch 5 (Fig. 1) dient zum anfänglichen Einfädeln des Erodierdrahtes 6 (Fig. 2). Nach dem Einfädeln des Erodierdrahtes 6 wird das Formstück 2 in üblicher Weise unter gleichmäßiger Ausbildung des Bearbeitungsspaltes 3 ausgeschnitten. Der Erodierdraht 6 wird von einer (nicht abgebildeten) Drahtrolle abgespult und in Spulrichtung S durch das Werkstück bewegt (Fig. 2).

Das Werkstück 1 wird in üblicher Weise mit den für die jeweilige Erosionsaufgabe optimalen Parametern ausgeschnitten. An einzelnen Stellen werden die Erodierparameter jedoch gezielt so ein- bzw. "verstellt", daß sich die Ablagerungen 4 bilden. Der Erodierdraht 6 tritt bei dem in Fig. 2 beispielhaft dargestellten Erodiervorgang von oben her unverschlissen in das Werkstück 1 ein. Die Ablagerungen 4 entstehen bei geeigneter Einstellung der Erosionsparameter zur Eintrittsseite des Erodierdrahtes 6 in das Werkstück 1 hin. Sie bilden sich seitlich des Drahtes 6 mit einer angenäherten Kurvenform und verbreitern sich vom Draht 6 in Richtung Werkstück 1.

Die Materialablagerung 4 kann den Erodierspalt 3 - wie in Fig. 3 ersichtlich - auf seiner vollen Breite überbrücken. Sie verschließt den Bearbeitungsspalt 3 an der der Drahtvorschubrichtung V bzw. der Erodierrichtung V abgewandten Seite.

Die Ablagerungen 4 besitzen i.A. eine Stärke H (Fig. 2) zwischen 0,2 und 0,7 mm (ab der Eindringkannte des Drahtes in das Werkstück). Sie sollten sich über eine Länge L von ca. 1 bis 3 mm erstrecken. Damit wird das Formstück 2 bereits gut im Werkstück gesichert und kann dennoch relativ einfach und unkompliziert - beispielsweise durch einen leichten Hammerschlag oder einen einfachen mechanischen Eingriff - aus dem Werkstück 1 getrennt und entfernt werden.

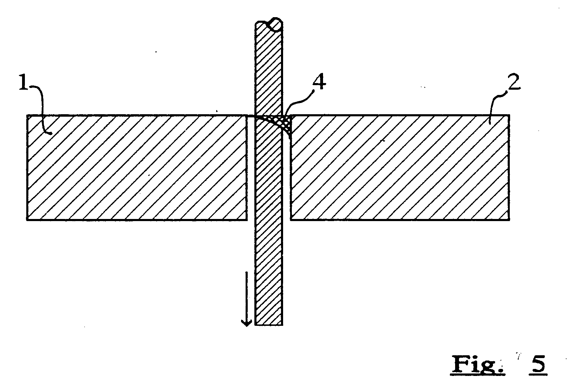

In Fig. 4 wird beispielhaft deutlich, wie die Erodierparameter verändert werden müssen, um den gewünschten Ablagerungseffekt zu erzielen. In der Figur ist ein Diagramm abgebildet, daß die Impuls- bzw. Stromstärken verschiedener Erodierimpulse bei einer vorgewählten Spannung sowie die Impulsdauern der einzelnen Impulse wiedergibt. Das Diagramm bezieht sich auf einen Erodierschnitt, bei dem als Erodierdrahtmaterial Messing 63 verwendet wird. "Normale" Erodierimpulse 7 besitzen eine Dauer T≈2µs und eine maximale Stromstärke I≈500 A. Werden die Impulsparameter in ungewöhnlicher Weise auf die Werte T'≈30µs und I≈80 A (Impulse 8) eingestellt, bilden sich die gewünschten Ablagerungen 4.

Die veränderte Impulsform 8 wird so lange aufrechterhalten, bis sich die Ablagerungen 4 über die gewünschte Länge L erstrecken.

Je nach Anforderung an die Sicherung des Formstückes 2 wird eine mehr oder weniger große Zahl von Ablagerungen 4 im Bearbeitungsspalt 3 vorgesehen.

Ein besonderer Vorteil der erfindungsgemäßen Ablagerungen 4 besteht in der Ausbildung einer elektrischen Brücke zwischen Werkstück 1 und Formstück 2. Das Werkstück 1 kann bereits beim Vorschnitt vollständig - ohne einen Reststeg stehenzulassen - ausgeschnitten werden. Die Ausfallsicherung des Formstückes 2 erfolgt durch die Ablagerungen 4. Soll das Formstück 2 durch einen weiteren Nachschnit weiterbearbeitet werden, können die Ablagerungen 4 während des Nachschnittes erosiv durchtrennt und dann z.B. leicht versetzt oder auch an gleicher Stelle sofort neu gebildet werden. Damit ist eine Rundumbearbeitung des Formstückes 2 in mehreren aufeinanderfolgenden Bearbeitungsschritten (wie z.B. Vor- und Nachschnitt) möglich, ohne daß Sicherungsmittel von außen durch das Bedienpersonal versetzt werden müßen. Überbrüken z.B. zwei Ablagerungen 4 den Erosionsspalt 3, kann ständig eine elektrische Brücke zwischen Formstück 2 und Werkstück 1 aufrechterhalten werden.

Nach Beenden des Erodiervorganges wird das Formstück 2 aus dem Werkstück 1 gelöst. Haftengebliebene Reste der Ablagerungen 4 können - falls erforderlich - z.B. mittels eines Sandstrahlgebläses entfernt werden.

Schließlich zeigt Fig. 5 noch eine Variante der erfindungsgemäßen Ausfallstücksicherung. Die Erosionsparameter werden dabei so gewählt, daß die Ablagerungen 4 zwischen Werkstück 1 und Formstück 2 nicht gleichmäßig verteilt sind. Vielmehr liegen die Materialablagerungen 4 am Formstück 2 (oder auch Ausfallstück) in großer Quantität vor und verringern sich vorzugsweise kontinuierlich zum Werkstück 1 hin.

Eine optimale Ausgestaltung der Ablagerungen 4 ist dann erreicht, wenn gerade noch eine physische Verbindung zwischen Formstück 2 und Werkstück 1 hergestellt ist. Dann ist die für das Abtrennen des Formstücks 2 aufzuwendende Kraft so gering wie möglich und es liegt dennoch eine Ausfall- bzw. Formstücksicherung vor.

Die einseitige Abscheidung der Ablagerungen 4 hat den Vorteil, daß mit der Entfernung des Ausfallstücks 2 der wesentliche Teil des nur als Hilfsmittel verwendeten Sicherungsmaterials wegfällt und nicht mehr im Rahmen einer präzisen Nachbearbeitung abgetragen werden muß. Dabei kann im Nachbearbeitungsprozeß Zeit und Energie gespart werden.

Vorteilhaft werden beim Nachschneiden (nach Entfernung des Ausfallstücks) die Erosionsparameter im Bereich der eine Art Materialbrücke bildenden Ablagerungen derart angepaßt, daß keine Korrektur oder Oberflächenfehler entstehen.

## Patentansprüche

1. Verfahren zur funkenenerosiven Bearbeitung von Werkstüken mittels eines Drahtes, bei dem ein Bearbeitungsspalt gebildet und ein Formstück aus dem Werkstück geschnitten wird, dadurch gekennzeichnet,
daß wenigstens eine Ablagerung (4) im Bearbeitungsspalt (3) gebildet wird, um das Formstück (2) im Werkstück (1) zu sichern.

2. Verfahren nach Anspruch 1 oder 2, dadurch gekennzeichnet,
daß die Ablagerungen (4) gerade so stark erzeugt werden, daß das Formstück (2) im Werkstück (1) zentriert wird.

3. Verfahren nach einem der Ansprüche 2 bis 3, dadurch gekennzeichnet,
daß die Ablagerungen (4) so erzeugt werden, daß das Formstück (2) im Werkstück (1) gegen Ausfallen gesichert wird.

4. Verfahren nach einem der vorstehenden Ansprüche, dadurch gekennzeichnet,
daß die Ablagerung (4) im Bearbeitungsspalt (3) durch gezieltes Einstellen einzelner Erosionsparameter gebildet wird.

5. Verfahren nach Anspruch 4, dadurch gekennzeichnet,
daß beim gezielten Einstellen der Erosionsparameter die Impulsparameter gegenüber ihren normalen Einstellungen verändert werden.

6. Verfahren nach Anspruch 5, dadurch gekennzeichnet,
daß beim gezielten Einstellen der Impulsparameter die Impulsdauer gegenüber ihrer normalen Einstellung verlängert und/oder die Impulsamplitude gegenüber ihrer normalen Einstellung verringert wird.

7. Verfahren nach einem der Ansprüche 4-6, dadurch gekennzeichnet,
daß beim gezielten Einstellen der Erosionsparameter die Spülparameter gegenüber ihren normalen Einstellungen verändert werden.

8. Verfahren nach Anspruch 7, dadurch gekennzeichnet,
daß beim Verändern der Spülparameter der Leitwert des Dielektrikums gegenüber seiner normalen Einstellung verändert wird.

9. Verfahren nach einem der Ansprüche 4-8, dadurch gekennzeichnet,
daß beim gezielten Einstellen der Erosionsparameter die Drahtvorschubgeschwindigkeit verändert wird.

10. Verfahren nach einem der vorstehenden Ansprüche, dadurch gekennzeichnet,
daß ein Erodierdraht (6) verwendet wird, dessen Material, insbesondere Messing, wenigstens teilweise die Ablagerung (4) bildet.

11. Verfahren nach wenigstens einem der vorstehenden Ansprüche, gekennzeichnet
durch eine derartige Wahl der Erosionsparameter, daß die Ablagerungen (4) hauptsächlich an bzw. auf dem Formstück erzeugt werden.

12. Verfahren nach einem der vorstehenden Ansprüche, dadurch gekennzeichnet,
daß die Sicherungsvorgänge automatisch durch entsprechend ausgelegte Software gesteuert werden.

13. Verfahren nach einem der vorstehenden Ansprüche, dadurch gekennzeichnet,
daß Konturstellen, die zum Anbringen der Ablagerungen (4) besonders geeignet sind, automatisch bestimmt werden.
